# EUROPEAN PATENT APPLICATION

(11) **EP 0 726 138 A1**
(43) Date of publication of application: **14.08.1996**
(21) Application number: 96101534.4
(22) Date of filing: 02.02.1996
(51) Int. Cl.: B29D 11/00

(54) **Production process of plastic photochromic lens**

(30) Priority: 10.02.1995 JP 22660/95
(71) Applicant: KUREHA KAGAKU KOGYO KABUSHIKI KAISHA, Chuo-ku Tokyo 103 (JP)
(72) Inventor: Machida, Katsuichi, Iwaki-shi, Fukushima (JP); Saito, Akira, Iwaki-shi, Fukushima (JP); Aoki, Minoru, Iwaki-shi, Fukushima (JP); Sakagami, Teruo, Iwaki-shi, Fukushima (JP)
(74) Representative: Grünecker, Kinkeldey, Stockmair & Schwanhäusser Anwaltssozietät

(57) **Abstract**

Disclosed herein is a production process of a plastic photochromic lens (10) which is excellent in the weather resistance of its photochromic function, has uniform photochromic effects all over the aperture of the lens and can sufficiently exhibit the performance of a photochromic compound to be contained in the lens. The process is a process for the production of a plastic photochromic lens (10) including a lens base (13) made of a synthetic resin and a photochromic layer (14) provided on one surface of the lens base(13) and formed of a synthetic resin, and includes the steps of arranging a mold element (21) for molding the photochromic layer (14) on the side of the one surface of the lens base (13) so as to oppose a molding surface thereof to the one surface of the lens base (13), thereby defining a cavity for molding the photochromic layer (14) with a uniform thickness between the one surface of the lens base (13) and the mold element (21) for molding the photochromic layer (14).

## Description

### BACKGROUND OF THE INVENTION

### 1) Field of the Invention:

The present invention relates to a process for the production of a plastic photochromic lens made of a synthetic resin or polymer, and more particularly to a process for the production of a plastic photochromic lens equipped with a photochromic layer containing a photochromic compound.

### 2) Description of the Background Art:

Photochromism is a phenomenon of reversible changes in color, in which when a substance of a certain sort is exposed to sunlight or ultraviolet-containing light such as light emitted from a mercury vapor lamp, the substance absorbs such light to undergo a color change, and returns to its original color state after stopping the exposure to the light. As optical goods having a photochromic function making use of such a phenomenon, there are lenses or see-through members, such as sunglasses, photochromic eyeglasses and goggles.

Inorganic glass mainly containing a silver halide is known as a photochromic material used in these goods. The photochromic material composed of the inorganic glass is considerably excellent in the width of wavelength range in which a color is developed, color strength and permanence of repeated coloring and fading.

On the other hand, in recent years, synthetic resins, or plastics have been widely used as optical materials because they are light-weight, easy to be processed, excellent in impact resistance and high in safety compared with the inorganic glass. Various kinds of plastic materials ranging from those low in refractive index typified by, for example, a diethylene glycol bis(allyl carbonate) resin designated "CR-39" to those high in refractive index are known. It has also been attempted to impart a photochromic function to lenses made of these plastic materials, and the product development of plastic photochromic lenses is being forwarded.

As methods of producing plastic photochromic lenses, there have heretofore been known the following methods:
(1) a method of introducing a photochromic compound in a plastic lens member by thermal diffusion (see, for example, Japanese Patent Application Laid-Open No. 112880/1985);
(2) a method of providing a photochromic coating layer containing a photochromic compound on the surface of a lens base made of a synthetic resin (see, for example, Japanese Patent Application Laid-Open No. 10604/1987); and
(3) a method of polymerizing a lens-forming material obtained by mixing a monomer for forming the lens with a photochromic compound (see, for example, Japanese Patent Application Laid-Open No. 11743/1987).

However, these methods involve the following problems.

In the method (1), a thermal diffusion treatment must be conducted at a sufficiently high temperature to suitably diffuse the photochromic compound into the lens member. It is therefore necessary to use a photochromic compound having high heat resistance, so that a degree of freedom of selection of the photochromic compound is considerably limited. On the other hand, it is also considered to use a lens member made of a synthetic resin low in heat distortion temperature in order to conduct the diffusion treatment of the photochromic compound at a lower temperature. In this case, however, there is a problem that difficulties are encountered in performing post-processing such as lamination of a hard coat layer on the surface of the resulting lens due to low heat resistance of the lens member. If the region in which the photochromic compound diffuses is limited to a very small region extremely close to the surface of the lens member, there is also a problem that the weather resistance of the photochromic compound becomes markedly low.

In the method (2), it is difficult to form a photochromic layer having high uniformity of thickness in the size of, for example, at least several microns in terms of average thickness, and besides, the durability of the resulting photochromic layer becomes insufficient because a resin soluble in organic solvents is used as a resin for forming the coat layer. Further, the photochromic compound may be dissolved out of the photochromic layer when a hard coat layer is formed on the photochromic layer.

In the method (3), the photochromic compound is dispersed all over the lens, so that the so-called whole lens comes to have photochromic effects. It is therefore easy to produce a plastic photochromic lens exhibiting excellent photochromic effects. When this method is applied to a lens uneven in thickness such as an eyeglass, however, photochromic effects are exhibited to a degree corresponding to the thickness of the lens, resulting in color irregularities. Further, when a monomer containing an aromatic group, halogen atom, sulfur atom and/or the like is used as the monomer for forming the lens in order to provide a lens high in refractive index, the weather resistance of a photochromic function of the resulting photochromic lens may be markedly lowered in some cases. Further, this method involves a demerit that in the production of a product required to machine by cutting and/or the like, a photochromic compound must be used in a more amount than the product needs, resulting in increased production cost.

### SUMMARY OF THE INVENTION

The present invention has been completed in view of the foregoing circumstances and has as its object the provision of a process for easily producing a plastic photochromic lens which is excellent in the weather resistance of its photochromic function, has uniform photochromic effects all over the aperture of the lens and can sufficiently exhibits the performance of a photochromic compound applied to the lens.

According to the present invention, there is thus provided a process for the production of a plastic photochromic lens having a lens base made of a synthetic resin and a photochromic layer provided on one surface of the lens base and formed of a synthetic resin, which comprises the steps of:
arranging a mold element for molding the photochromic layer on the side of the one surface of the lens base so as to oppose a molding surface thereof to the one surface of the lens base, thereby defining a cavity for molding the photochromic layer with a uniform thickness between the one surface of the lens base and the mold element for molding the photochromic layer; and
polymerizing a polymerizable material for forming the photochromic layer, which contains at least one photochromic compound, in the cavity for molding the photochromic layer, thereby forming the photochromic layer.

According to the present invention, there is also provided a process for the production of a plastic photochromic lens having a lens base made of a synthetic resin and a photochromic layer provided on one surface of the lens base and formed of a synthetic resin, which comprises the steps of:
providing a mold for molding the lens base, which is composed of a pair of mold elements, to polymerize a polymerizable material for forming the lens base in a cavity of the mold for molding the lens base, thereby forming the lens base made of the synthetic resin, and then separating one mold element of the mold for forming the lens base from the lens base being held by the other mold element;
arranging a mold element for molding the photochromic layer on the exposed side of the lens base so as to oppose a molding surface thereof to the exposed surface of the lens base, thereby defining a cavity for molding the photochromic layer with a uniform thickness between the exposed surface of the lens base and the mold element for molding the photochromic layer; and
polymerizing a polymerizable material for forming the photochromic layer, which contains at least one photochromic compound, in the cavity for molding the photochromic layer, thereby forming the photochromic layer.

In the production processes described above, it may be preferred that the thickness of the cavity for molding the photochromic layer be within a range of 0.1-2.0 mm. In the case where the lens base is formed by the process using a mold, the separated one mold element of the mold for molding the lens base may be used as the mold element for molding the photochromic layer.

In the production processes of the plastic photochromic lens according to the present invention, the lens base, i.e., a lens on a surface of which the photochromic layer is to be formed, is employed as one mold element to use a surface of the lens base as a molding surface as it is, thereby defining the cavity for molding the photochromic layer with a uniform thickness together with the mold element for molding the photochromic layer. Since the polymerizable material for forming the photochromic layer, which contains at least one photochromic compound, is polymerized in this cavity for molding the photochromic layer, a photochromic layer can be formed on one surface of the lens base with a sufficient and uniform thickness all over the aperture of the lens base. Accordingly, produced is a plastic photochromic lens excellent in the weather resistance of its photochromic function and free from the occurrence of color irregularities even if the thickness of the lens base varies.

Since a material different from the material for forming the lens base can be used as the polymerizable material for forming the photochromic layer, the material for forming the lens base can be selected freely. As a result, a plastic photochromic lens having any desired refractive index can be produced without damaging the performance of the photochromic compound to be used, and so even a photochromic lens having a high refractive index can be produced with ease.

In the case where the lens base itself is produced by means of a mold in accordance with a cast polymerization process or the like, a combined member, which is in a state that the lens base has been held by a mold element used in the production of the lens base, may be used as one mold element of a mold for forming the photochromic layer, whereby the photochromic layer can be formed on the exposed one surface of the lens base while protecting the other surface of the lens base by the mold element for the cast polymerization. Therefore, the other surface of the lens base can be prevented from being damaged during the formation of the photochromic layer.

In the case where the lens base is composed of a meniscus lens, it is preferable that the photochromic layer is formed on the convex side of the lens base, whereby a plastic photochromic lens suitable for use in eyeglasses can be provided.

### BRIEF DESCRIPTION OF THE DRAWINGS

FIG. 1 is a cross-sectional view illustrating exemplary construction of a plastic photochromic lens produced by the process according to the present invention.

FIG. 2 is a cross-sectional view illustrating exemplary construction of a mold for molding a lens base used in the production of the lens base in the process according to the present invention.

FIG. 3 is a cross-sectional view illustrating a state that a polymerizable material for forming the lens base has been filled into a cavity of the mold for molding the lens base shown in FIG. 2.

FIG. 4 is a cross-sectional view illustrating exemplary construction of a combined member of the lens base.

FIG. 5 is a cross-sectional view illustrating construction of a mold for molding a photochromic layer with a cavity for molding the photochromic layer.

FIG. 6 is a cross-sectional view illustrating a state that a polymerizable material for forming the photochromic layer has been filled into the cavity for molding the photochromic layer shown in FIG. 5.

### DETAILED DESCRIPTION OF THE INVENTION AND PREFERRED EMBODIMENTS

The present invention will hereinafter be described in detail by reference to the drawings.

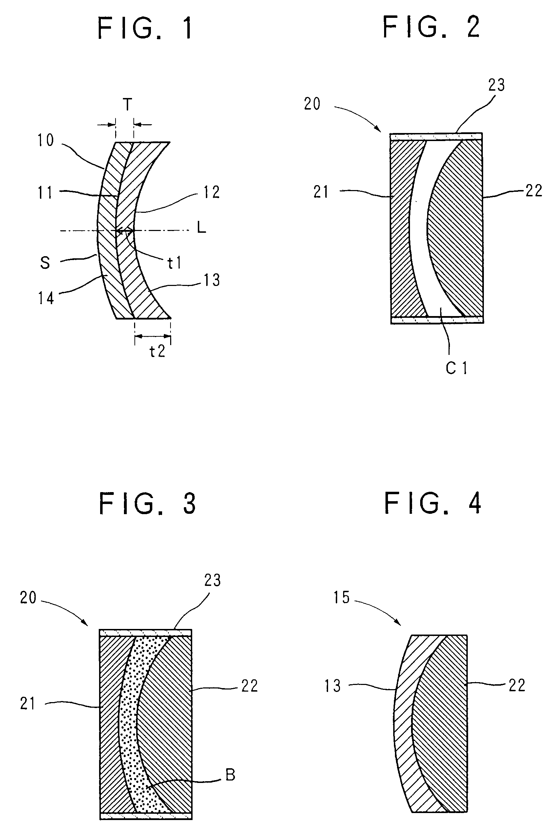

FIG. 1 illustrates exemplary construction of a plastic photochromic lens obtained by the process according to the present invention. This plastic photochromic lens 10 is the so-called meniscus lens and may be applied to a spectacle lens, for example, in a state that its convex surface S is an incident plane of light. In this plastic photochromic lens 10, a lens base 13 formed of a synthetic resin is in the form of a meniscus having a convex surface 11 and a concave surface 12. On the whole convex surface 11 of this lens base 13, there is provided a light-regulating photochromic layer 14 formed of a synthetic resin containing a photochromic compound, said layer 14 having a uniform thickness all over the layer.

The lens base 13 in this embodiment is composed of a negative lens in which a thickness t1 of the central part in a direction along a center line L connecting the center of the convex surface 11 and the center of the concave surface 12 and extending in lateral directions in the drawing is smaller than a thickness t2 of the peripheral part. The photochromic layer 14 has a uniform thickness all over the layer, and so a thickness of the central part of the whole plastic photochromic lens 10 is smaller than that of its peripheral part.

For example, the thickness t1 of the central part of the lens base 13 may be 0.5-50 mm, while the thickness t2 of peripheral part of the lens base 13 may be 0.5-50 mm. Besides, the thickness T of the photochromic layer is within a range of, for example, 0.1-2.0 mm preferably.

In the present invention, the plastic photochromic lens having such construction is produced in the following manner.

A lens base 13 made of a synthetic resin is first provided. This lens base 13 may be obtained, for example, by subjecting a polymerizable material for forming a lens base (hereinafter referred to as "polymerizable material for lens base") to cast polymerization. More specifically, as illustrated in FIG. 2, a mold 20 for molding the lens base, comprising a front mold element 21 and a rear mold element 22 is provided. The front mold element 21 and the rear mold element 22 are arranged so as to oppose their molding surfaces to each other in a state that they have been separated from each other according to the intended thickness of the lens base 13. In this state, a sealing and fixing member 23 composed of a suitable material is provided so as to cover in common the outer peripheral surfaces of the front mold element 21 and the rear mold element 22, thereby defining a cavity C1 for lens base corresponding to the shape of the intended lens base 13.

As illustrated in FIG. 3, a polymerizable material B for lens base is filled into the cavity C1 for lens base, and the polymerizable material B for lens base is polymerized in this state, thereby producing the lens base 13.

As the front mold element 21 and the rear mold element 22, those made of glass are generally used in that high surface precision can be achieved. Since the surface precision in the convex surface S of the plastic photochromic lens 10 finally obtained is determined by the surface precision of the surface of the photochromic layer 14, it is however not necessary to use that having high surface precision as the front mold element 21. Accordingly, as the front mold element 21, there may be used a mold element capable of easily releasing from the resulting lens base, for example, a mold element made of a resin such as polypropylene or a fluorocarbon resin, or a mold element made of glass, on the molding surface of which a fluorocarbon resin has been coated.

Before the polymerizable material for lens base is filled, a releasing agent may also be applied on the molding surface of the mold element 21 in advance, thereby permitting easy release of the mold element 21 from the resulting lens base.

As the sealing and fixing member 23, there may be used a gasket formed of an ethylene-vinylacetate copolymer, an ethylene-ethyl acrylate copolymer or the like, or a suitable pressure sensitive adhesive tape.

No particular limitation is imposed on a polymerizable substance used in the polymerizable material for lens base so far as it can be subjected to cast polymerization and provide a polymer having excellent transparency. As specific examples of such polymerizable substances, may be mentioned allylcarbonates of polyols, such as diethylene glycol bis(allylcarbonate); methacrylates such as methyl methacrylate, isobutyl methacrylate, isobornyl methacrylate, benzyl methacrylate and ethylene glycol dimethacrylate; and aromatic vinyl monomers such as styrene, α -methylstyrene and divinylbenzene.

In the polymerizable material for lens base, an aromatic monomer having a halogen atom such as chlorine, bromine or iodine or a compound containing a sulfur or phosphorus atom, which deteriorates the photochromic compound to lower its durability when caused to coexist therewith, or a compound or monomer, which forms the main cause of lowering the photochromic function of the photochromic compound, may be contained, thereby obtaining a lens base formed of a polymer high in refractive index, for example, a polymer having a refractive index of at least 1.540.

In the polymerization treatment, it is preferable to raise the polymerization temperature either by stages or continuously, thereby controlling the polymerization rate. This temperature control prevents the formation of an air gap between the molding surface of the mold 20 for molding the lens base and the resulting molded article, and a lens base having a shape conforming with the molding surface can hence be produced.

In the case where the lens base 13 is produced by the above-described process, the sealing and fixing member 23 is removed after performing the polymerization treatment, and the front mold element 21 is further separated, thereby forming a combined member 15 of the lens base, which is in a state that the lens base 13 has been held by the rear mold element 22, as illustrated in FIG. 4. It is highly preferable to use this combined member 15 of the lens base in the subsequent step of forming the photochromic layer 14 as it is.

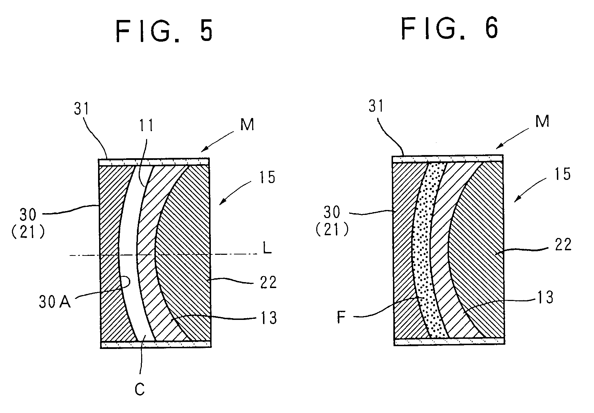

In the step of forming the photochromic layer 14, as illustrated in FIG. 5, the combined member 15 of the lens base is used as one mold element to make up a mold M for molding the photochromic layer. More specifically, a glass-made mold element 30 for molding the photochromic layer is arranged on the side of the convex surface 11 of the lens base 13 in the combined member 15 of the lens base so as to oppose its molding surface 30A to the convex surface 11 of the lens base 13. In this state, a sealing and fixing member 31 composed of a suitable material is provided so as to cover in common the outer peripheral surfaces of the combined member 15 of the lens base and the mold element 30 for molding the photochromic layer, thereby defining a cavity C for molding the photochromic layer between the convex surface of the lens base 13 and the molding surface 30A of the mold element 30 for molding the photochromic layer.

As illustrated in FIG. 6, a polymerizable material F for forming the photochromic layer (hereinafter referred to as "polymerizable material for photochromic layer") is filled into the cavity C for molding the photochromic layer, and the polymerizable material F for photochromic layer is polymerized in this state.

As the mold element 30 for molding the photochromic layer of the mold for molding the photochromic layer, a mold element, the molding surface 30A of which has a concave shape corresponding to the shape of the convex surface 11 of the lens base 13, namely, a mold element, the molding surface 30A of which has such a specific shape that the whole surface comes into close contact with the convex surface 11, is used.

The molding surface 30A of this mold element 30 for molding the photochromic layer is required to have high surface precision. Accordingly, for example, when a glass-made mold element having high surface precision is used as the front mold element 21 in the production of the lens base 13 as described above, this mold element may also be used as the mold element 30 for molding the photochromic layer.

In the cavity C for molding the photochromic layer, the thickness in the direction parallel to the center line L is controlled uniformly over the whole cavity. In the present invention, the degree of uniformity of the thickness in the cavity C for molding the photochromic layer may be within a range of from -20% to +20%, preferably from -10% to +10% of the intended thickness.

It is also preferred that the thickness of the cavity C for molding the photochromic layer be within a range of 0.1-2.0 mm.

If the thickness of the cavity C for molding the photochromic layer is smaller than 0.1 mm, any photochromic layer having a sufficient thickness cannot be formed, resulting in a plastic photochromic lens having an insufficient photochromic function. On the other hand, if the thickness of the cavity C for molding the photochromic layer exceeds 2.0 mm, the degree of color development by photochromic effects is not enhanced in proportion to its thickness, and so such a thickness is not efficient. Besides, since some photochromic compounds to be used may be deteriorated by ultraviolet rays to turn to a reddish color, the light transmittance of the resulting photochromic lens may be lowered even when its photochromic effects are not exhibited.

As with the mold 20 for molding the lens base, a gasket or a tape may be used as the sealing and fixing member 31. However, it is preferable to use the tape in that it can accommodate irrespective of the thickness of the lens base 13 and the thickness of the photochromic layer 14 to be formed.

No particular limitation is imposed on a polymerizable substance used in the polymerizable material for photochromic layer so far as it can be subjected to cast polymerization and provide a polymer having excellent transparency. It is however preferable to use those not impeding the photochromic function and durability of the photochromic compound to be used, for example, those containing no halogen-substituted aromatic group-containing monomer.

As specific examples of such polymerizable substances, may be mentioned allylcarbonates of polyols, such as diethylene glycol bis(allylcarbonate); methacrylates such as methyl methacrylate, isobutyl methacrylate, isobornyl methacrylate, benzyl methacrylate and ethylene glycol dimethacrylate; and aromatic vinyl monomers such as styrene, α -methylstyrene and divinylbenzene.

It is also preferable to use 2-ethylhexyl methacrylate or lauryl methacrylate, which has a low glass transition temperature (Tg), in combination. This combined use can enhance the changing rate of coloring and fading due to the photochromic operation.

A reaction product of a hydroxyl group-containing acrylate or methacrylate with a polyisocyanate may also be used. This use can improve the ability to mold the photochromic layer and enhance the performance of the resulting photochromic layer.

As a photochromic compound used in the polymerizable material for photochromic layer, a spirooxazine compound, chromene compound or fulgide compound may be preferably used in that such a compound is excellent in the permanence of repeated photochromism.

As the spirooxazine compound, a compound represented by the following general formula (1) is preferably used. General formula (1): 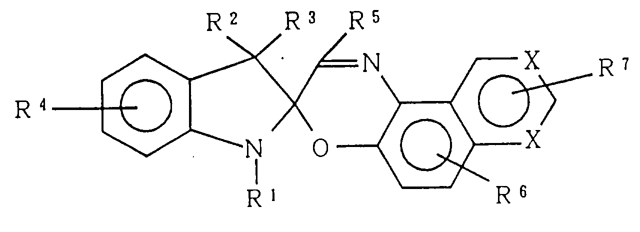
wherein one of two Xs means a carbon atom, the other denotes a nitrogen atom, R¹ stands for an alkyl, alkoxyalkyl, alkoxycarbonylalkyl, or substituted or unsubstituted arylalkyl group, R² and R³ represent individually an alkyl group, R⁴ means a hydrogen or halogen atom, or an alkyl, halogenated alkyl, alkoxy, hydroxyl, alkoxyalkyl, alkoxycarbonyl, or substituted or unsubstituted amino group, and R⁵ , R⁶ and R⁷ denote individually a hydrogen or halogen atom, or an alkyl, alkoxy, hydroxyl, alkoxyalkyl, alkoxycarbonyl, or substituted or unsubstituted amino group.

As specific examples of such spirooxazine compounds, may be mentioned the following compounds:
(1) 1,3,3-trimethylspiro[indoline-2,3'-(3H)-naphtho-(2,1-b) (1,4)oxazine];
(2) 5-methyl-1,3,3-trimethylspiro[indoline-2,3'-(3H)-naphtho(2,1-b)(1,4)oxazine];
(3) 4-trifluoromethyl-1,3,3-trimethyl-6'-(1-piperidinyl)-spiro[indoline-2,3'-(3H)-naphtho(2,1-b)(1,4)oxazine];
(4) 5,6,7-trifluoro-1,3,3-trimethyl-6'-(1-piperidinyl)-spiro[indoline-2,3'-(3H)-naphtho(2,1-b)(1,4)oxazine];
(5) 1-(2-phenoxyethyl)-3,3-dimethylspiro[indoline-2,3'-(3H) -naphtho(2,1-b)(1,4)oxazine];
(6) 1,3-dimethyl-3-ethylspiro[indoline-2,3'-(3H)-naphtho-(2,1-b)(1,4)oxazine];
(7) 1,3,3-trimethyl-6'-(1-piperidinyl)spiro[indoline-2,3'-(3H)-naphtho(2,1-b)(1,4)oxazine];
(8) 8'-hydroxy-1,3-dimethyl-3-ethylspiro[indoline-2,3'-(3H) -naphtho-(2,1-b)(1,4)oxazine];
(9) 1,3,3-trimethylspiro[indoline-2,3'-(3H)-pyrido(3,2-f) (1,4)benzoxazine];
(10) 1-isopropyl-3,3-dimethylspiro[indoline-2,3'-(3H)-pyrido(3,2-f)(1,4)benzoxazine];
(11) 5-methyl-1,3,3-trimethylspiro[indoline-2,3'-(3H)-pyrido(3,2-f)(1,4)benzoxazine];
(12) 1,3,3-trimethylspiro[indoline-2,3'-(3H)-pyrido(3,4-f) (1,4)benzoxazine];
(13) 1-(n-hexyl)-3,3-dimethylspiro[indoline-2,3'-(3H)-pyrido(3,4-f)(1,4)benzoxazine];
(14) 1-(n-hexyl)-3-methyl-3-ethylspiro[indoline-2,3'-(3H)-pyrido(3,4-f)(1,4)benzoxazine];
(15) 1-cyclohexyl-3,3-dimethylspiro[indoline-2,3'-(3H)-pyrido(3,4-f)(1,4)benzoxazine];
(16) 1-cyclohexyl-methyl-3,3-dimethylspiro[indoline-2,3'-(3H)-pyrido(3,4-f)(1,4)benzoxazine];
(17) 1-(2-ethylhexyl)-3,3-dimethylspiro[indoline-2,3'-(3H)-pyrido(3,4-f)(1,4)benzoxazine];
(18) 5-methoxy-1-(n-hexyl)-3,3-dimethylspiro[indoline-2,3'-(3H)-pyrido(3,4-f)(1,4)benzoxazine];
(19) 1-(n-dodecyl)-3,3,5-trimethylspiro[indoline-2,3'(3H)-pyrido(3,4-f)(1,4)benzoxazine];
(20) 1-(n-docosanyl)-3,3-dimethylspiro[indoline-2,3'-(3H)-pyrido(3,4-f)(1,4)benzoxazine]; and
(21) 8'-hydroxy-1-(n-hexyl)-3,3-dimethylspiro[indoline-2,3'-(3H)-pyrido(3,4-f)(1,4)benzoxazine].

As the chromene compound, a compound represented by the following general formula (2) or (3) is preferably used in that such a compound is excellent, particularly, in the weather resistance of photochromism.

### General formula (2):

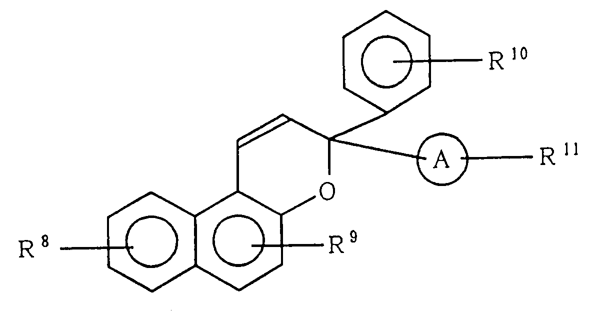

### General formula (3):

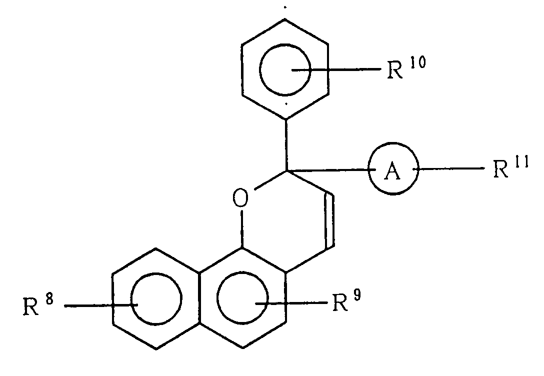

wherein R⁸ and R⁹ mean individually an alkyl or alkoxy group, R¹⁰ and R¹¹ denote individually a hydrogen or halogen atom, or an alkyl, alkoxy, hydroxyl, alkoxyalkyl, alkoxycarbonyl, or substituted or unsubstituted amino group, and Ⓐ stands for a substituted or unsubstituted phenylene or heterocyclic group.

As specific examples of such chromene compounds, may be mentioned diarylnaphtopyrans such as 3,3-diphenyl-(3H)-naphtho[2,1-b]pyran and 2,2-diphenyl-(2H)-naphtho[1,2-b]-pyran; substituted phenylene derivatives of diarylnaphtopyran such as 3-(2-fluorophenyl)-3-(4-methoxyphenyl)-(3H)-naphtho[2,1-b]pyran and 3-(2-methyl-4-methoxyphenyl)-3-(4-ethoxyphenyl)-(3H)-naphtho[2,1-b]pyran; and heterocyclic ring-containing naphthopyrans such as 3-(2-furyl)-3-(2-fluorophenyl)-(3H)-naphtho[2,1-b]pyran, 3-(2-thienyl)-3-(2-fluoro-4-methoxyphenyl)-(3H)-naphtho[2,1-b]pyran and 3-[2-(1-methylpyrrolyl)]-3-(2-methyl-4-methoxyphenyl)-(3H)-naphtho[2,1-b]pyran.

Spiro[bicyclo[3,3,1]nonane-9-3'-3H-naphtho[2,1-b]-pyran, spiro[bicyclo[3,3,1]nonane-9-2'-3H-naphtho[2,1-b]-pyran and the like may also be used.

As such fulgide compound, a compound represented by the following general formula (4) is preferably used. General formula (4): 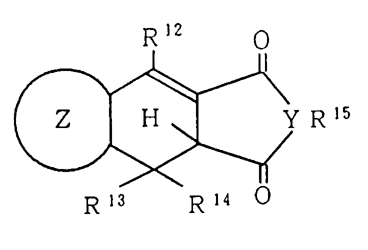
wherein Y means an oxygen or nitrogen atom, R¹² denotes an alkyl, aryl or alkoxyalkyl group, R¹³ and R¹⁴ stand individually for a substituted or unsubstituted alkyl group or are alkylene groups bonded to each other to form a ring, R¹⁵ means an alkyl, alkoxyalkyl or aryl group when Y is a nitrogen atom, or denotes vacancy when Y is an oxygen atom, and 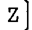 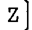 is an aromatic or heterocyclic ring.

The above-mentioned photochromic compounds may be used either singly or in any combination thereof. For example, 2 to 5 kinds of the photochromic compounds may also be used in combination to develop the desired color such as gray or brown.

As needed, an antioxidant, ultraviolet absorbent, light stabilizer and/or the like may be added to the polymerizable material for photochromic layer.

As the light stabilizer, a hindered amine type light stabilizer is preferred in that the weather resistance of the photochromic layer can be improved.

As specific examples of the light stabilizers, may be mentioned bis(1,2,2,6,6-pentamethyl-4-piperidyl)sebacate, bis(2,2,6,6-tetramethyl-4-piperidyl)sebacate, di(1,2,2,6,6-pentamethyl-4-piperidyl)-butyl(3',5'-di-tert-butyl-4-hydroxybenzyl)malonate, 1-[2- {3-(3,5-di-tert-butyl-4-hydroxyphenyl)propionyloxy} ethyl]-4- {3-(3,5-di-tert-butyl-4-hydroxyphenyl)propionyloxy} -2,2,6,6-tetramethylpiperidine,poly[[6- { (1,1,3,3-tetramethylbutyl)-amino} -1,3,5-triazin-2,4-diyl][1,6- {2,2,6,6-tetramethyl-4-piperidinyl} aminohexamethylene]], poly[ {6-(morpholino)-S-triazin-2,4-diyl} {1,6-(2,2,6,6-tetramethyl-4-piperidinyl)amino} hexamethylene] and polymers of 4-hydroxy-2,2,6,6-tetramethyl-1-piperidinethanol dimethyl-succinate.

In order to eliminate the influence of oxygen, a singlet oxygen quencher may be further added to the polymerizable material for photochromic layer. The addition of such a quencher can improve the weather resistance of the photochromism of the spirooxazine compound in the photochromic layer 14.

As such singlet oxygen quenchers, may be used are β -carotene, various Schiff base nickel (II) complexes, 1,4-diazabicyclo[2,2,2]octane, amines such as triethylamine and phenols, and especially amines and phenols low in absorption in a visible region may be used preferably.

In the formation of the above-described photochromic layer, it is preferable to treat the convex surface 11 of the lens base 13 with a silane coupling agent or by ultraviolet ray irradiation. This treatment can improve the adhesion of the photochromic layer 14 to be formed to the lens base 13.

In order to enhance the adhesion of the photochromic layer 14 to the lens base 13, it is also effective to stop the polymerization treatment before the polymerization reaction of the polymerizable substance for forming the lens base is completed, so as to complete such polymerization reaction at the same time as the polymerization reaction of the polymerizable material for forming the photochromic layer.

After completion of the polymerization treatment of the polymerizable material for photochromic layer, the plastic photochromic lens 10 in which the photochromic layer 14 is formed on the convex surface 11 of the lens base 13 is obtained by removing the sealing and fixing member 31 and separating the lens from the rear mold element 22 and the mold element 30 for molding the photochromic layer.

In the plastic photochromic lens 10, it is also feasible to form a hard coat layer on, for example, the convex surface S of the photochromic layer. This formation permits achievement of high surface hardness. It is also feasible to further form an antireflection layer and/or a protective layer on this hard coat layer as needed.

According to the production process of the plastic photochromic lens as described above, the cavity C for molding the photochromic layer is defined by the mold element 30 for molding the photochromic layer, which is arranged on the side of the convex surface 11 of the lens base 13, and the convex surface 11 of the lens base 13 as a molding surface. The polymerizable material for photochromic layer is filled into this cavity C for molding the photochromic layer and then polymerized. Therefore, the photochromic layer 14 can be formed on the convex surface 11 of the lens base 13 with a sufficient and uniform thickness all over the layer. Since this photochromic layer 14 is formed of a polymer containing a photochromic compound, provided is a plastic photochromic lens excellent in the weather resistance of its photochromic function and free from the occurrence of color irregularities irrespective of variations of thickness of the lens base.

Because a material different from the polymerizable material for lens base can be used as the polymerizable material for photochromic layer, the polymerizable material for lens base can be chosen from a wide selection range without damaging the performance of the photochromic compounds to be used: As a result, a plastic photochromic lens having the desired high refractive index can be produced with ease.

In addition, the use of the combined member 15, in which the lens base has been held by a mold element, as one mold element for defining the cavity C for forming the photochromic layer permits the formation of the photochromic layer 14 on the front surface (the convex surface 11) of the lens base 13 while protecting the back surface (the concave surface 12) of the lens base 13. Therefore, the back surface of the lens base 13 can be prevented from being damaged during the formation of the photochromic layer 14.

In the present invention, a variety of modifications and changes can be made. For example, the lens base used as one mold element for defining the cavity C for forming the photochromic layer is not limited to the illustrated meniscus lens, and various types of plastic lenses may hence be used.

As the lens base, there may be used those not only produced by the method of using the cast polymerization process, but also produced by various other methods. Even in the case where the cast polymerization process is used, it is also possible to take mold elements used in the cast polymerization process out of the resulting lens and render this simple lens thus separated to the process for forming the photochromic layer as the lens base.

Furthermore, the photochromic layer can be formed on either side of the lens base. For example, the process for producing the plastic photochromic lens, the photochromic layer of which is formed on the convex surface of the lens base, has been described in the above embodiment. In the present invention, it is however possible to produce a plastic photochromic lens the photochromic layer of which is formed on the concave surface of the lens base. In the case where a plastic photochromic lens to be used as a spectacle lens is produced, it is preferred that the photochromic layer be formed on the convex surface of a meniscus lens base, which will come as an incident plane of light such as ultraviolet rays, in that coloring owing to its photochromic effects is more effectively exhibited.

It is feasible to form photochromic layers on both front and back surfaces of the lens base. In this case, the above-described process for forming the photochromic layer may be repeated. However, it is also feasible to arrange mold elements on both sides of the lens base so as to oppose to each other, thereby defining two cavities for forming the photochromic layer, and to conduct cast polymerization in both cavities at the same time.

The present invention will hereinafter be described more specifically by the following examples. However, the present invention is not limited to and by these examples. All designations of "part" or "parts" as will be used in the following examples mean part or parts by mass.

### Example 1:

### (1) Preparation of a polymerizable material for lens base:

Added to a component composed of 25.47 parts of 2-hydroxy-3-phenoxypropyl acrylate, 22.53 parts of a trimer of hexamethylene diisocyanate, 30.00 parts of α -methylstyrene, 12.00 parts of divinylbenzene and 10.00 parts of tert-butyl methacrylate were 0.50 part of 2,6-di-tert-butyl-p-cresol and 0.05 part of di-n-butyltin dilaurate as a urethanation catalyst, thereby conducting a urethanation reaction at 40°C for 3 hours. Thereafter, 1.50 parts of tert-butyl peroxypivalate were added as a polymerization initiator to the resultant reaction product, thereby preparing a polymerizable material for lens base.

### (2) Production of a lens base and a combined member thereof:

A glass-made mold (20) for molding a lens base, which was composed of a front mold element (21) and a rear mold element (22), was provided, and the front mold element (21) and the rear mold element (22) were arranged in such a manner that a distance between center positions of the molding surfaces of both mold elements was 1.1 mm. In this state, the outer peripheral surfaces of both mold elements were covered in common with a sealing and fixing member (23) composed of a tape to fix them, thereby defining a cavity (C1) for molding the lens base between the front mold element (21) and the rear mold element (22) (see FIG. 2).

The polymerizable material for lens base as above-prepared was filled into this cavity (C1) for molding the lens base (see FIG. 3) to conduct a polymerization treatment by raising the polymerization temperature by stages, namely, maintaining the temperature at 40°C for 8 hours, at 60°C for 2 hours and at 80°C for 1 hour, thereby molding a lens base (13).

Thereafter, the tape (23) was taken out, and the front mold element (21) was separated from the lens base, thereby obtaining a combined member (15) of the lens base, in which the lens base (13) was held by the rear mold element (22) (see FIG. 4).

### (3) Preparation of a polymerizable material for photochromic layer:

Added to 26.97 parts of 2-hydroxyethyl methacrylate, 23.03 parts of isophorone diisocyanate and 50.00 parts of 2-ethylhexyl methacrylate were 0.05 part of di-n-butyltin dilaurate as a urethanation catalyst, thereby conducting a urethanation reaction at 60°C for 3 hours. To the resultant reaction product, 0.13 part of 1-cyclohexylmethyl-3,3-dimethylspiro[indoline-2,3'-(3H)-pyrido(3,4-f) (1,4)benzoxazine], 0.018 part of 4-trifluoromethyl-1,3,3-trimethyl-6'-(1-piperidinyl)-spiro[indoline-2,3'-(3H)-naphtho(2,1-b)(1,4)oxazine], 0.35 part of 3,3-diphenyl-(3H)-naphtho[2,1-b]pyran and 0.20 part of bis(1,2,2,6,6-pentamethyl-4-piperidyl) sebacate were added with mixing, and 1.50 parts of tert-butyl peroxyneodecanate were added further to the mixture, thereby preparing a polymerizable material for photochromic layer.

### (4) Formation of a photochromic layer:

After the molding surface of the front mold element (21) used in the production of the lens base (13) and removed was washed, this mold element was used as a mold element (30) for molding a photochromic layer. This mold element (30) for molding the photochromic layer was arranged on the side of the convex surface (11) of the lens base (13) in the combined member (15) of the lens base so as to oppose its concave molding surface to the convex surface (11) of the lens base (13) in the combined member (15) of the lens base. In this state, the outer peripheral surfaces of both mold elements were covered in common with a sealing and fixing member (31) to fix them, thereby defining a cavity (C) for molding the photochromic layer having a uniform thickness of 0.8 mm between the lens base (13) and the mold element (30) for molding the photochromic layer (see FIG. 5).

The polymerizable material for photochromic layer as above-prepared was filled into this cavity (C) for molding the photochromic layer (see FIG. 6) to conduct a polymerization treatment by raising the polymerization temperature by stages, namely, maintaining the temperature at 40°C for 10 hours, at 60°C for 3 hours, at 80°C for 1 hour and at 90°C for 1 hour, thereby forming a photochromic layer (14).

Thereafter, the sealing and fixing member (31) was taken out, and the rear mold element (22) and the mold element (30) for molding the photochromic layer were separated, thereby obtaining a plastic photochromic lens (10) of -5.00 diopter, in which the photochromic layer (14) was 0.75 mm thick all over the layer, the central part including the photochromic layer (14) was 1.8 mm thick, and the peripheral part including the photochromic layer (14) was 9.0 mm thick.

The plastic photochromic lens was uniform in color as a whole and somewhat tinged with blue.

The lens base in the plastic photochromic lens had a refractive index of 1.548.

The light transmittance of the thus-obtained plastic photochromic lens was measured and found to be 88% at a wavelength of 555 nm.

When the plastic photochromic lens was exposed to ultraviolet rays for 5 minutes, the lens developed a gray color. The light transmittance thereof was measured in this state and found to be 55% at a wavelength of 555 nm. When this lens was placed in a dark place, it returned in a while to its original color state before the exposure to ultraviolet rays. It was thus confirmed that this lens had an excellent photochromic function.

Further, the plastic photochromic lens thus obtained was subjected to a weathering test for 120 hours by means of a weatherometer (Atlas Weather-O-meter Ci35 model, manufactured by Toyo Seiki Seisaku-Sho, Ltd.). As a result, the lens became somewhat tinged with yellow compared with the lens before the test.

When the plastic photochromic lens after the weathering test was exposed to ultraviolet rays in the same manner as described above to measure its light transmittance before and after the exposure, the light transmittance before the exposure to ultraviolet rays was 85% at a wavelength of 555 nm, while the light transmittance right after the exposure to ultraviolet rays was 59% at a wavelength of 555 nm. It was thus confirmed that the lens after the weathering test had substantially the same photochromic characteristics as the lens before the weathering test.

### Comparative Example 1:

The same photochromic compounds and light stabilizer as those used in Example 1, namely, 0.13 part of 1-cyclohexylmethyl-3,3-dimethylspiro[indoline-2,3'-(3H)-pyrido(3,4-f)(1,4)-benzoxazine], 0.018 part of 4-trifluoromethyl-1,3,3-trimethyl-6'-(1-piperidinyl)-spiro[indoline-2,3'-(3H)-naphtho(2,1-b)(1,4)oxazine], 0.35 part of 3,3-diphenyl-(3H)-naphtho[2,1-b]pyran and 0.20 part of bis(1,2,2,6,6-pentamethyl-4-piperidyl) sebacate were added to a polymerizable material for lens base prepared in the same manner as in Example 1 with mixing, thereby preparing a lens-forming material. This lens-forming material was subjected to cast polymerization, thereby obtaining a plastic photochromic lens for control, in which the central part was 1.8 mm thick, and the peripheral part was 9.0 mm thick.

This plastic photochromic lens was tinged with blue as a whole, and its color strength became greater as it got toward the peripheral part from the center. This was due to the fact that color irregularities were caused by variations in the thickness of the lens.

The light transmittance of the thus-obtained plastic photochromic lens was measured and found to be 82% at a wavelength of 555 nm.

When the plastic photochromic lens was exposed to ultraviolet rays for 5 minutes, the lens developed a gray color. The light transmittance thereof was measured in this state and found to be 52% at a wavelength of 555 nm. When this lens was placed in a dark place, it returned in a while to its original color state before the exposure to ultraviolet rays.

Further, the plastic photochromic lens thus obtained was subjected to a weathering test for 60 hours by means of a weatherometer (Atlas Weather-O-meter Ci35 model). As a result, the lens became somewhat tinged with red compared with the lens before the test, and its color strength became greater as it got toward the peripheral part from the center.

When the plastic photochromic lens after the weathering test was exposed to ultraviolet rays in the same manner as described above to measure its light transmittance before and after the exposure, the light transmittance before the exposure to ultraviolet rays was 77% at a wavelength of 555 nm, while the light transmittance right after the exposure to ultraviolet rays was 57% at a wavelength of 555 nm. It was thus confirmed that the lens after the weathering test was deteriorated in its photochromic function compared with the lens before the weathering test.

### Comparative Example 2:

Dissolved in a mixed solvent of 60.00 parts of methyl ethyl ketone and 40.00 parts of toluene were 60.00 parts of an epoxy resin precursor, "EPONIX #1100 CLEAR" (product of Dainippon Toryo Co., Ltd.), and the same photochromic compounds and light stabilizer as those used in Example 1, namely, 0.13 part of 1-cyclohexylmethyl-3,3-dimethylspiro[in doline-2,3'-(3H)-pyrido(3,4-f)(1,4)-benzoxazine], 0.018 part of 4-trifluoromethyl-1,3,3-trimethyl-6'-(1-piperidinyl)-spiro[indoline-2,3'-(3H)-naphtho(2,1-b)-(1,4)oxazine], 0.35 part of 3,3-diphenyl-(3H)-naphtho-[2,1-b]pyran and 0.20 part of bis(1,2,2,6,6-pentamethyl-4-piperidyl) sebacate, thereby preparing a coating formulation for forming photochromic layer.

This coating formulation for forming photochromic layer was applied by a dipping process to the convex surface of a lens base produced in the same manner as in Example 1. Thereafter, the coated lens base was predried at 40°C , and the epoxy resin precursor was then subjected to a curing reaction under conditions of 80°C and 6 hours, thereby obtaining a plastic photochromic lens for control, which had a photochromic layer 6 µ m thick.

This plastic photochromic lens was substantially colorless. The light transmittance of the thus-obtained plastic photochromic lens was measured and found to be 92% at a wavelength of 555 nm.

When the plastic photochromic lens was exposed to ultraviolet rays for 5 minutes, the lens developed a gray color. The light transmittance thereof was measured in this state and found to be 78% at a wavelength of 555 nm. When this lens was placed in a dark place, it returned in a while to its original color state before the exposure to ultraviolet rays.

Further, the plastic photochromic lens thus obtained was subjected to a weathering test for 120 hours by means of a weatherometer (Atlas Weather-O-meter Ci35 model). As a result, the lens became somewhat tinged with red as a whole compared with the lens before the test.

When the plastic photochromic lens after the weathering test was exposed to ultraviolet rays in the same manner as described above to measure its light transmittance before and after the exposure, the light transmittance before the exposure to ultraviolet rays was 90% at a wavelength of 555 nm, while the light transmittance right after the exposure to ultraviolet rays was 87% at a wavelength of 555 nm. It was thus confirmed that the lens after the weathering test almost lost its photochromic function.

As the reason why the photochromic function has been lost, it is considered that since the thickness of the photochromic layer is as considerably thin as 6 µ m, the photochromic compounds in the photochromic layer are deteriorated by the weathering test.

## Claims

1. A process for the production of a plastic photochromic lens having a lens base made of a synthetic resin and a photochromic layer provided on one surface of the lens base and formed of a synthetic resin, which comprises the steps of:
arranging a mold element for molding the photochromic layer on the side of the one surface of the lens base so as to oppose a molding surface thereof to the one surface of the lens base, thereby defining a cavity for molding the photochromic layer with a uniform thickness between the one surface of the lens base and the mold element for molding the photochromic layer; and
polymerizing a polymerizable material for forming the photochromic layer, which contains at least one photochromic compound, in the cavity for molding the photochromic layer, thereby forming the photochromic layer.

2. A process for the production of a plastic photochromic lens having a lens base made of a synthetic resin and a photochromic layer provided on one surface of the lens base and formed of a synthetic resin, which comprises the steps of:
providing a mold for molding the lens base, which is composed of a pair of mold elements, to polymerize a polymerizable material for forming the lens base in a cavity of the mold for molding the lens base, thereby forming the lens base made of the synthetic resin, and then separating one mold element of the mold for forming the lens base from the lens base being held by the other mold element;
arranging a mold element for molding the photochromic layer on the exposed side of the lens base so as to oppose a molding surface thereof to the exposed surface of the lens base, thereby defining a cavity for molding the photochromic layer with a uniform thickness between the exposed surface of the lens base and the mold element for molding the photochromic layer; and
polymerizing a polymerizable material for forming the photochromic layer, which contains at least one photochromic compound, in the cavity for molding the photochromic layer, thereby forming the photochromic layer.

3. The process according to Claim 2, wherein the separated one mold element of the mold for molding the lens base is used as the mold element for molding the photochromic layer.

4. The process according to any one of Claims 1 to 3, wherein the thickness of the cavity for molding the photochromic layer is within a range of 0.1-2.0 mm.

5. The process according to any one of Claims 1 to 4, wherein the lens base is composed of a meniscus lens, and the photochromic layer is formed on the convex side of the lens base.

6. A plastic photochromic lens comprising a lens base and a photochromic layer composed of a polymer, which contains at least one photochromic compound, and formed on one surface of the lens base by a cast polymerization process in a mold making use of the lens base as one mold element.

7. The plastic photochromic lens according to Claim 6, wherein the lens base has a refractive index of at least 1.540.
